# EUROPÄISCHE PATENTSCHRIFT

(11) **EP 2 617 771 B1**
(45) Veröffentlichungstag und Bekanntmachung des Hinweises auf die Patenterteilung: **06.04.2016**
(21) Anmeldenummer: 13163665.6
(22) Anmeldetag: 06.01.2011
(51) Int. Cl.: C08L 67/04, C08J 9/16

(54) **Verfahren zur Herstellung von expandierbaren Polymilchsäure-haltigen Granulaten**
Method for manufacturing expandable granulates containing polylactic acids
Procédé destiné à la fabrication de granulés expansibles contenant des poly-acides de lait

(30) Priorität: 14.01.2010 EP 10150730; 02.12.2010 EP 10193484
(43) Veröffentlichungstag der Anmeldung: 24.07.2013
(62) Teilanmeldung aus: 11700056.2
(73) Patentinhaber: BASF SE, 67056 Ludwigshafen am Rhein (DE)
(72) Erfinder: Füßl, Andreas, 69120 Heidelberg (DE); Sampath, Bangaru Dharmapuri Sriramulu, 67063 Ludwigshafen (DE); Hofmann, Maximilian, 38 Bel-Air Avenue, Island South, Hong Kong (HK); Bellin, Ingo, 68307 Mannheim (DE); Nalawade, Sameer, 68159 Mannheim (DE); Hahn, Klaus, 67281 Kirchheim (DE); Künkel, Andreas, 67434 Neustadt (DE); Loos, Robert, 67067 Ludwigshafen (DE)

(56) Entgegenhaltungen:
- EP-A1- 2 135 724
- WO-A1-01/12706
- JP-A- 2007 169 394

## Beschreibung

Die Erfindung betrifft ein Verfahren zur Herstellung von expandierbaren Polymilchsäure-haltigen Granulaten, umfassend die Schritte:
a) Aufschmelzen und Einmischen der Komponenten i) 50 bis 99,9 Gew.-%, bezogen auf das Gesamtgewicht der Komponenten i bis iii, Polymilchsäure, ii) 0 bis 49,9 Gew.-%, bezogen auf das Gesamtgewicht der Komponenten i bis iii, eines oder mehrerer weiterer Polymere iii) 0,1 bis 2 Gew.-%, bezogen auf das Gesamtgewicht der Komponenten i bis iii, eines Diepoxids oder Polyepoxids und iv) 0,1 bis 5 Gew.-%, bezogen auf das Gesamtgewicht der Komponenten i bis iii, eines Nukleierungsmittels,
b) Einmischen v) 1 bis 7 Gew.-% bezogen auf das Gesamtgewicht der Komponten i bis iv, eines organischen Treibmittels und vi) 0,01 bis 5 Gew.% eines Co-Treibmittels - ausgewählt aus der Gruppe Stickstoff, Kohlendioxid, Argon, Helium oder Mischungen davon - in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Verfahren zur Herstellung von expandierbaren Polymilchsäure-haltigen Granulaten (Polymilchsäure-haltige Partikelschäume) sind in WO 01/012706 in allgemeiner Form beschrieben, wobei weder auf die spezielle Polymilchsäuremischung (siehe Komponenten i) bis iv) in Schritt a) noch auf die vorteilhafte Fahrweise via druckbeaufschlagten Unterwassergranulierung (siehe die erfindungsgemäßen Schritte c) bis e) hingewiesen wird. Dieses Verfahren führt in weiten Bereichen nicht zu reproduzierbaren Partikelschäumen und verhindert insbesondere nicht das vorzeitige Aufschäumen der expandierbaren Granulate.

WO 08/130226 beschreibt ein aufwendiges, vielstufiges Verfahren zur Herstellung von expandierbaren Polymilchsäure-haltigen Granulaten, in der die Polymilchsäurepartikel beschichtet werden und dann mit Kohlendioxid nachimprägniert werden bzw. die Partikel mit Kohlendioxid nachimprägniert werden und dann beschichtet werden. Die Nachimprägnierung mit Kohlendioxid führt weiterhin zu vorgeschäumten Partikeln, die eine ganz andere Technologie für die Weiterverarbeitung der Partikelschäume nach sich zieht.

JP2007 169394 beschreibt die Herstellung expandierter Schaumperlen aus Milchsäure, während die vorliegende Erfindung die Herstellung von expandierbaren Partikelschäumen mittels eines organischen Treibmittels und eines Co-Treibmittels betrifft.

Aufgabe der vorliegenden Erfindung war es, ein einfaches, prozessfähiges Verfahren zur Herstellung von expandierbaren Polymilchsäure-haltigen Granulaten mit kleiner Granulatgröße und einheitlicher Granulatgrößenverteilung bereitzustellen.

Demgemäß wurde das eingangs beschriebene Verfahren gefunden.

Im Folgenden wird das erfindungsgemäße Verfahren näher beschrieben.

Das Polymilchsäure-haltige Polymer, das in Stufe a) hergestellt wird, ist in der Regel eine Mischung aus:
i) 50 bis 98,9 Gew.-%, bezogen auf das Gesamtgewicht der Komponenten i bis iii, Polymilchsäure,
ii) 1 bis 49,9 Gew.-%, bezogen auf das Gesamtgewicht der Komponenten i bis iii, mindestens eines Polyesters auf Basis von aliphatischen und/oder aromatischen Dicarbonsäuren und aliphatischen Dihydroxyverbindung,
iii) 0,1 bis 2 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
iv) 0 bis 10 Gew.-%, bezogen auf das Gesamtgewicht der Komponenten i bis iii, eines oder mehrerer Additive

Vorzugsweise besteht das Polymilchsäure-haltige Polymer aus einer Mischung, enthaltend:
i) 55 bis 98,9 Gew.-%, insbesondere bevorzugt 70 bis 94,9 Gew.-% bezogen auf das Gesamtgewicht der Komponenten i bis iii, Polymilchsäure,
ii) 1 bis 44,9 Gew.-%, insbesondere bevorzugt 5 bis 29,9 Gew.-% bezogen auf das Gesamtgewicht der Komponenten i bis iii, mindestens eines Polyesters auf Basis von aliphatischen Dicarbonsäuren und aliphatischen Dihydroxyverbindung oder aus Polyalkylensuccinat-co-terephthalat,
iii) 0,1 bis 2 Gew.-%, insbesondere bevorzugt 0,1 bis 1 Gew.-% bezogen auf das Gesamtgewicht der Komponenten i bis iii, eines Epoxidgruppen-haltigen Copolymers auf Basis Styrol, Acrylsäureester und/oder Methacrylsäureester, und
iv) 0.1 bis 2 Gew.-% bezogen auf das Gesamtgewicht der Komponenten i bis iii, eines Nukleierungsmittels.

Insbesondere bevorzugt besteht das Polymilchsäure-haltige Polymer PM' aus einer Mischung, enthaltend:
i) 60 bis 98,9 Gew.-%, insbesondere bevorzugt 65 bis 79,9 Gew.-% bezogen auf das Gesamtgewicht der Komponenten i bis iii, Polymilchsäure,
ii) 1 bis 39,9 Gew.-%, insbesondere bevorzugt 20 bis 34,9 Gew.-% bezogen auf das Gesamtgewicht der Komponenten i bis iii, mindestens eines Polyesters auf Basis:
   a) 90 bis 99,5 mol %, bezogen auf die Komponenten a bis b, Bernsteinsäure;
   b) 0,5 bis 10 mol %, bezogen auf die Komponenten a bis b, einer oder mehrerer C₈-C₂₀ Dicarbonsäuren, vorzugsweise ausgewählt aus Terephthalsäure, Azelainsäure, Sebacinsäure und/oder Brassylsäure;
   c) 98 bis 102 mol %, bezogen auf die Komponenten a bis b, 1,3 Propandiol oder 1,4-Butandiol;
iii) 0,1 bis 2 Gew.-%, insbesondere bevorzugt 0,1 bis 1 Gew.-% bezogen auf das Gesamtgewicht der Komponenten i bis iii, eines Epoxidgruppen-haltigen Copolymers auf Basis Styrol, Acrylsäureester und/oder Methacrylsäureester, und
iv) 0 bis 1 Gew.-% und vorzugsweise 0,1 bis 1 Gew.-% bezogen auf das Gesamtgewicht der Komponenten i bis iii, eines Nukleierungsmittels.

Wie Beispiel 14 zeigt lassen sich aus dem zuletzt genannten Polymilchsäure-haltigen Polymer PM' expandierbare Granulate und hieraus Schaumstoffe mit verbesserter Wärmeformbeständigkeit, verbesserten mechanischen Eigenschaften und geringer Dichte herstellen.

Als Komponente i) wird Polymilchsäure mit dem folgenden Eigenschaftsprofil bevorzugt eingesetzt:
- einer Schmelzvolumenrate (MVR bei 190° C und 2.16 kg nach ISO 1133) von 0.5 bis 15 bevorzugt 1 bis 9, besonders bevorzugt 2 bis 8 ml/10 Minuten
- einem Schmelzpunkt unter 180° C;
- einem Glaspunkt (Tg) größer 40°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks® das Ingeo® 2002 D, 4032 D, 4042 D und 4043 D, 8251 D, 3251 D und insbesondere 8051 D sowie 8052D. NatureWorks 8051 D und 8052 D sind Polymilchsäuren der Fa. NatureWorks, mit den folgenden Produkteigenschaften: Tg: 65,3°C, Tm: 153,9°C, MVR: 6,9 [ml/10 Minuten], M_{w}: 186000, Mn: 107000. Weiterhin weisen diese Produkte eine etwas höhere Säurezahl auf.

Für die Herstellung der erfindungsgemäßen expandierbaren Granulate haben sich insbesondere Polymilchsäuren mit einer MVR nach ISO 1133 [190°C/2,16 kg] von 5 bis 8 ml/10 Minuten als vorteilhaft erweisen.

Insbesondere geeignet sind Polymilchsäuren, die den o.g. MVR-Bereich aufweisen und/oder eine Onset-Temperatur bei der Kaltkristallisation im Bereich von 80°C bis 125°C, bevorzugt bei 90°C bis 115°C und insbesondere bevorzugt bei 95°C bis 105°C, gemessen mittels DSC (differential scanning calorimetry) bei einer Heizrate von 20K/min, aufweisen (Meßbereich -60°C bis 220°C; Mettler DSC 30 mit einem TC15/TA controller, Mettler-Toledo AG).

Es wurde gefunden, dass die meisten am Markt erhältlichen Polymilchsäuretypen unter den zuvor genannten Bedingungen eine Onset-Temperatur bei der Kaltkristallisation von unter 80°C aufweisen. Eine Gegenüberstellung der Polymilchsäure (PLA)-Typen NatureWorks® 8051 D, 8052D und 4042D soll das unterschiedliche Kristallisationsverhalten der daraus hergestellten Granulate verdeutlichen (s. Tabelle). Die Tabelle zeigt DSC-Messungen von expandierbaren Granulaten zweier PLA-Typen, die jeweils mit 0,3 Gew.- %Talkum nukleiert worden und mit 5,7 Gew.-% n-Pentan als Treibmittel beladen waren.

**Tabelle: DSC-Daten bei einer Heizrate von 20K/min (Messbereich -60°C bis 220°C)**

| Beispiel | Tg (Glastemp.) | Tc-Onset | Tc (Kaltkristallisat.) | Tm (Schmelzp.) |
|---|---|---|---|---|
| PLA 4042 D | 42,4°C | 71,8°C | 82,5°C | 155,6°C |
| PLA 8051 D | 41,1°C | 94,7°C | 106,9°C | 147,6°C |

Die expandierbaren Granulate weisen nach der Herstellung in der Regel einen kristallinen Anteil von nur wenigen Prozent auf; sie sind also überwiegend amorph. Eine erhöhte Onset-Temperatur bei der Kaltkristallisation im Bereich von 80°C bis 125°C, bevorzugt bei 90°C bis 115°C und insbesondere bevorzugt bei 95°C bis 105°C begünstigt ein Aufschäumen mit Wasserdampf. Kristallisierneigung und Aufschäumverhalten der expandierbaren Granulate sind bei PLA-Typen wie NatureWorks® 8051 D, 8052D optimal aufeinander abgestimmt.

Als Komponente ii sind aliphatische oder teilaromatische (aliphatisch-aromatische) Polyester zu verstehen.

Als Komponente ii) sind wie erwähnt rein aliphatische Polyester geeignet. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden von den Firmen Showa Highpolymers unter dem Namen Bionolle und von Mitsubishi unter dem Namen GSPIa vermarktet. Neuere Entwicklungen sind in der EP08165370.1 beschrieben.

Die aliphatischen Polyester weisen in der Regel Viskositätszahlen nach DIN 53728 von 150 bis 320 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Teilaromatische Polyester, die ebenfalls als Komponenet ii) geeignet sind, bestehen aus aliphatischen Diolen und aliphatischen sowie aromatischen Dicarbonsäuren. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₄-C₁₈-Dicarbonsäuren wie Bernsteinsäure, Glutarsäure, Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester als Komponente ii eingesetzt. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Für das erfindungsgemäße Verfahren zur Herstellung von Partikelschäumen sind insbesondere biologisch abbaubare, aliphatisch-aromatischer Polyester ii geeignet, die enthalten:
a) 40 bis 70 mol %, bezogen auf die Komponenten a bis b, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
b) 60 bis 30 mol %, bezogen auf die Komponenten a bis b, eines Terephthalsäurederivats;
c) 98 bis 102 mol %, bezogen auf die Komponenten a bis b, eines C₂-C₈-Alkylendiols oder C₂-C₆-Oxyalkylendiols;
d) 0,00 bis 2 Gew.-%, bezogen auf das Gesamtgewicht der Komponenten a bis c, eines Kettenverlängerers und /oder Vernetzers ausgewählt aus der Gruppe bestehend aus: einem di oder polyfunktionellen Isocyanat, Isocyanurat, Oxazolin , Epoxid, Peroxid, Carbonsäureanhydrid und /oder einem mindestens trifunktionellen Alkohol oder einer mindestens trifunktionellen Carbonsäure;
geeignet.

Bevorzugt eingesetzte aliphatisch-aromatische Polyester ii enthalten:
a) 50 bis 65 und insbesondere 58 mol %, bezogen auf die Komponenten a bis b, eines oder mehrerer Dicarbonsäurederivate oder Dicarbonsäuren ausgewählt aus der Gruppe bestehend aus Bernsteinsäure, Azelainsäure, Brassylsäure und vorzugsweise Adipinsäure, insbesondere bevorzugt Sebazinsäure;
b) 50 bis 35 und insbesondere 42 mol %, bezogen auf die Komponenten a bis b, eines Terephthalsäurederivats;
c) 98 bis102 mol %, bezogen auf die Komponenten a bis b, 1,4-Butandiol und
d) 0 bis 2 Gew.-%, vorzugsweise 0,01 bis 2 Gew.-%, bezogen auf das Gesamtgewicht der Komponenten a bis c, eines Kettenverlängerers und /oder Vernetzers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere eines epoxidhaltigen Poly(meth)acrylats) und /oder einem mindestens trifunktionellen Alkohol oder einer mindestens trifunktionellen Carbonsäure.

Als aliphatische Dicarbonsäuren eignen sich vorzugsweise, Bernsteinsäure, Adipinsäure und insbesondere bevorzugt Sebazinsäure. Bernsteinsäure- und Sebazinsäurehaltige Polyester haben den Vorteil, dass sie auch als nachwachsender Rohstoff zur Verfügung stehen.

Bevorzugt eingesetzte Polyester ii enthalten:
a) 90 bis 99,5 mol %, bezogen auf die Komponenten a bis b, Bernsteinsäure;
b) 0,5 bis 10 mol %, bezogen auf die Komponenten a bis b, einer oder mehrerer C₈-C₂₀ Dicarbonsäuren
c) 98 bis 102 mol %, bezogen auf die Komponenten a bis b, 1,3 Propandiol oder 1,4-Butandiol.

Insbesondere bevorzugt eingesetzte Polyester ii enthalten:
a) 90 bis 99,5 mol %, bezogen auf die Komponenten a bis b, Bernsteinsäure;
b) 0,5 bis 10 mol %, bezogen auf die Komponenten a bis b, Terephthalsäure, Azelainsäure, Sebacinsäure und/oder Brassylsäure
c) 98 bis 102 mol %, bezogen auf die Komponenten a bis b, 1,3-Propandiol oder 1,4-Butandiol und
d) 0,01 bis 5 Gew.-%, bezogen auf das Gesamtgewicht der Komponenten a bis c, eines Kettenverlängerers und/oder Vernetzers ausgewählt aus der Gruppe bestehend aus: einem polyfunktionellen Isocyanat, Isocyanurat, Oxazolin, Epoxid (insbesondere einem epoxidhaltigen Poly(meth)acrylat), einem mindestens trifunktionellen Alkohol oder einer mindestens trifunktionellen Carbonsäure.

Die Synthese der beschriebenen Polyester ii erfolgt nach den in WO-A 92/09654, WO-A 96/15173 oder vorzugsweise in WO-A 09/127555 und WO-A 09/127556 beschriebenen Verfahren, vorzugweise in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Die Polyester ii werden anschließend in einem zweiten Schritt nach den in WO-A 96/15173 und EP-A 488 617 beschriebenen Verfahren hergestellt. Der Präpolyester wird mit Kettenverlängeren d), beispielsweise mit Diisocyanaten oder mit epoxidhaltigen Polymethacrylaten in einer Kettenverlängerungsreaktion zu einem Polyester mit einer VZ von 50 bis 450 mL/g, vorzugsweise 80 bis 250 mL/g umgesetzt.

In der Regel werden 0,01 bis 2 Gew-%, vorzugsweise 0,1 bis 1,0 Gew.-% und insbesondere bevorzugt 0,1 bis 0,3 Gew.-% bezogen auf das Gesamtgewicht der Komponenten a bis c, eines Vernetzers (d') und/oder Kettenverlängerers (d) ausgewählt aus der Gruppe bestehend aus: einem polyfunktionellen Isocyanat, Isocyanurat, Oxazolin, Epoxid, Peroxid, Carbonsäureanhydrid , einem mindestens trifunktionellen Alkohol oder einer mindestens trifunktionellen Carbonsäure eingesetzt. Als Kettenverlängerer d kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Vernetzer d' aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten d und d' lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten. Die Verbindungen d wirken scherentzähend, d.h. die Viskosität bei höheren Schergeschwindigkeiten wird geringer.

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die genannten Polyester können Hydroxy- und/oder Carboxylend-gruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

Die biologisch abbaubaren Polyester ii können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Komponente iii) wird im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

Unter Komponente iv wird insbesondere eines oder mehrere der folgenden Additive verstanden: Stabilisator, Nukleierungsmittel, Gleit- und Trennmittel, Tensid, Wachs, Antistatikum, Antifog-Mittel, Farbstoff, Pigment, UV-Absorber, UV-Stabilisator oder sonstigen Kunststoffadditiv. Insbesondere bevorzugt ist wie bereits erwähnt der Einsatz von 0,5 bis 1 Gew.-% bezogen auf die Komponenten i und ii eines Nukleierungsmittels. Unter Nukleierungsmittel wird insbesondere Talkum, Kreide, Ruß, Graphit, Calcium- oder Zinkstearat, Poly-D-Milchsäure, N,N'ethylen-bis-12-hydroxystearamid oder Polyglykolsäure verstanden: Besonders bevorzugt ist Talkum als Nukleierungsmittel.

Das Treibmittel kann als weitere Komponente v aufgefasst werden.

Die treibmittelhaltige Polymerschmelze enthält in der Regel eine oder mehrere Treibmittel in homogener Verteilung in einem Anteil von insgesamt 1 bis 7 Gew.-% bevorzugt 3 bis 7 Gew.-%, bezogen auf die treibmittelhaltige Polymerschmelze. Als Treibmittel, eignen sich die üblicherweise in EPS eingesetzten physikalischen Treibmittel, wie aliphatische Kohlenwasserstoffe mit 2 bis 7 Kohlenstoffatomen, Alkohole, Ketone, Ether, Amide oder halogenierte Kohlenwasserstoffe. Bevorzugt wird iso-Butan, n-Butan, n-Pentan und insbesondere iso-Pentan eingesetzt. Weiterhin bevorzugt sind Gemische aus n-Pentan und iso-Pentan.

Die zugesetzte Treibmittelmenge wird so gewählt, dass die expandierbaren Granulate ein Expansionsvermögen α, definiert als Schüttdichte vor dem Vorschäumen von 500 bis 800 und vorzugsweise 580 bis 750 kg/m³ und eine Schüttdichte nach dem Vorschäumen höchstens von 125 bevorzugt 8 bis 100 kg/m³ aufweisen.

Bei Verwendung von Füllstoffen können in Abhängigkeit von der Art und Menge des Füllstoffes Schüttdichten im Bereich von 590 bis 1200 kg/m³ auftreten.

Des weiteren können der Polymerschmelze Additive, Keimbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 10, bevorzugt im Bereich von 1 bis 5 Gew.-% zugesetzt. Zur homogenen und mikrodispersen Verteilung der Pigmente in dem Polymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Polymere, einzusetzen. Bevorzugte Weichmacher sind Mineralöle, Phthalate, die in Mengen von 0,05 bis 10 Gew.-%, bezogen auf das Polymerisat, eingesetzt werden können.

Zur Herstellung der erfindungsgemäßen expandierbaren Granulate wird das Treibmittel in die Polymerschmelze eingemischt. Das Verfahren umfasst die Stufen A) Schmelzerzeugung, B) Mischen C) Fördern und D) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt durch Aufschmelzen von Polymergranulaten erzeugt werden. Bei Bedarf kann die Schmelzetemperatur über einen Kühler abgesenkt werden. Für die Granulierung kommen beispielsweise die druckbeaufschlagte Unterwassergranulierung, Granulierung mit rotierenden Messern und Kühlung durch Sprühvernebelung von Temperierflüssigkeiten, in Betracht. Zur Durchführung des Verfahrens geeignete Apparateanordnungen sind z.B.:
i) Extruder - statischer Mischer - Kühler - Granulator
ii) Extruder - Granulator

Weiterhin kann die Anordnung einen Seitenextruder zur Einbringung von Additiven, z.B. von Feststoffen oder thermisch empfindlichen Zusatzstoffen aufweisen.

Die treibmittelhaltige Polymerschmelze wird in der Regel mit einer Temperatur im Bereich von 140 bis 300°C, bevorzugt im Bereich von 160 bis 240°C durch die Düsenplatte gefördert.

Die Düsenplatte wird mindestens auf die Temperatur der treibmittelhaltigen Polymerschmelze beheizt. Bevorzugt liegt die Temperatur der Düsenplatte im Bereich von 20 bis 100°C über der Temperatur der treibmittelhaltigen Polymerschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,1 bis 2 mm, bevorzugt im Bereich von 0,1 bis 1,2 mm, besonders bevorzugt im Bereich von 0,1 bis 0,8 mm liegen. Damit lassen sich auch nach Strangaufweitung Granulatgrößen unter 2 mm, insbesondere im Bereich 0,2 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im Allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Polymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

In der Regel weisen die Granulate einen mittleren Durchmesser im Bereich von 0,1 bis 2 mm und 50 bis 300 Hohlräume/mm² Querschnittsfläche auf. Durch die Absenkung der Temperatur bei der Unterwassergranulierung kann die Schüttdichte der auf den Bereich von 580 bis 750 kg/m³ und vorzugsweise 580 bis 720kg/m³ verringert werden. Weiterhin weisen die so hergestellten expandierbaren Polymilchsäure-haltigen Granulate eine erhöhte Lagerstabilität auf. Sie können noch nach Wochen problemlos aufgeschäumt werden.

Die Verringerung der Schüttdichte und Erhöhung der Lagerstabilität der expandierbaren Polymilchsäure-haltigen Granulate lässt sich erreichen durch:
a) Aufschmelzen und Einmischen der Komponenten i) 50 bis 99,9 Gew.-%, bezogen auf das Gesamtgewicht der Komponenten i bis iii, Polymilchsäure, ii) 0 bis 49,9 Gew.-%, bezogen auf das Gesamtgewicht der Komponenten i bis iii, eines oder mehrerer weiterer Polymere iii) 0,1 bis 2 Gew.-%, bezogen auf das Gesamtgewicht der Komponenten i bis iii, eines Diepoxids oder Polyepoxids und iv) 0,1 bis 5 Gew.-%, bezogen auf das Gesamtgewicht der Komponenten i bis iii, eines Nukleierungsmittels,
b) Einmischen v) 1 bis 7 Gew.-%, bezogen auf das Gesamtgewicht der Komponenten i bis iv, eines organischen Treibmittels und iv) 0,01 bis 5 Gew.-% eines Co-Treibmittels - ausgewählt aus der Gruppe Stickstoff, Kohlendioxid, Argon, Helium oder Mischungen davon - in die Polymerschmelze gegebenenfalls mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Durch die Verwendung von flüchtigen, flüssigen / gasförmigen Hohlräume bildende Co-Treibmittel vi) eine zelluläre Struktur in den expandierbaren Granulaten eingestellt werden kann, mit deren Hilfe der späteren Schäumvorgang verbessert und die Zellgröße kontrolliert werden kann.

Als Nukleierungsmittel iv) und Treibmittel v) eignen sich die zuvor beschriebenen Mittel.

Der Verfahren zur Einstellung dieser Hohlraum-Morphologie kann auch als Vornukleierung bezeichnet werden, wobei die Hohlräume im Wesentlichen durch das Co-Treibmittel vi) gebildet werden.

Das die Hohlräume bildende Co-Treibmittel vi) unterscheidet sich vom eigentlichen Treibmittel v in dessen Löslichkeit im Polymeren. Bei der Herstellung werden zunächst Treibmittel v) und Co-Treibmittel vi) im Polymeren bei ausreichend hohem Druck vollständig gelöst. Anschließend wird der Druck reduziert, vorzugsweise innerhalb kurzer Zeit, und somit die Löslichkeit des Co-Treibmittel vi) reduziert. Dadurch stellt sich eine Phasenseparation in der polymeren Matrix ein und eine vornukleierter Struktur entsteht. Das eigentliche Treibmittel v) bleibt aufgrund dessen höherer Löslichkeit und / oder dessen geringer Diffusionsgeschwindigkeit überwiegend im Polymeren gelöst. Simultan zur Druckreduzierung wird vorzugsweise eine Temperaturreduktion durchgeführt, um eine zu starke Nukleierung des Systems zu verhindern und ein Ausdiffundieren des eigentlichen Treibmittels v) zu verringern. Erreicht wird dies durch Co-Treibmittel vi) in Verbindung mit optimalen Granulierbedingungen.

Bevorzugt entweicht das Co-Treibmittel vi) zu mindestens 80 Gew.-% innerhalb von 24 h aus den expandierbaren thermoplastischen Partikeln bei einer Lagerung bei 25°C, Normaldruck und 50% relativer Feuchtigkeit. Die Löslichkeit des Co-Treibmittels vi) in den expandierbaren thermoplastischen Partikeln liegt bevorzugt unter 0,1 Gew.-% In allen Fällen sollte die zugegebene Menge des eingesetzten Co-Treibmittels vi) bei der Vornukleierung die maximale Löslichkeit bei den vorliegenden Prozessbedingungen überschreiten. Daher werden bevorzugt Co-Treibmittel vi) eingesetzt, die eine geringe, aber ausreichende Löslichkeit im Polymeren aufweisen. Dazu zählen insbesondere Gase wie Stickstoff, Kohlendioxid, Luft oder Edelgase, besonders bevorzugt Stickstoff, dessen Löslichkeit in vielen Polymeren sich bei niedrigen Temperaturen und Drücken verringert. Es sind aber auch andere flüssige Additive vorstellbar.

Besonders bevorzugt werden inerte Gase wie Stickstoff und Kohlendioxid eingesetzt. Beide Gase zeichnen sich neben ihren geeigneten physikalischen Eigenschaften durch geringe Kosten, gute Verfügbarkeit, einfache Handhabbarkeit und reaktionsträges bzw. inertes Verhaltes aus. Beispielsweise findet in Gegenwart der beiden Gase in nahezu allen Fällen keine Degradation des Polymeren statt. Da die Gase selbst aus der Atmosphäre gewonnen werden, besitzen sie zudem ein umweltneutrales Verhalten.

Die eingesetzte Menge des Co-Treibmittel vi) sollte dabei: (a) hinreichend klein sein, um sich bei den gegebenen Schmelzetemperaturen und -drücken bei der Schmelzeimprägnierung bis zur Granulierung zu lösen; (b) ausreichend hoch sein, um sich beim Granulierwasserdruck und der Granuliertemperatur aus dem Polymer zu entmischen und nukleieren. In einer bevorzugten Ausführungsform ist mindestens eines der verwendeten Treibmittel bei Raumtemperatur und unter Normaldruck gasförmig. Besonders bevorzugt wird Talkum als Nukleierungsmittel iv) in Kombination mit Stickstoff als Co-Treibmittel vi) eingesetzt.

Für den Transport und die Lagerung der expandierbaren Granulate kommen unter anderem Metallfässer und Oktabins zum Einsatz. Beim Einsatz von Fässern ist zu beachten, dass sich durch die Freisetzung der Co-Treibmittel vi) ggf. Druck im Fass aufbauen kann. Als Packmittel sind daher vorzugsweise offene Gebinde wie Oktabins oder Fässer zu verwenden, die einen Druckabbau durch Permeation des Gases aus dem Fass ermöglichen. Besonders bevorzugt sind dabei Fässer, die ein Ausdiffundieren des Co-Treibmittels vi) ermöglichen und eine Ausdiffundieren des eigentlichen Treibmittels v) minimieren bzw. verhindern. Dies kann beispielsweise durch die Abstimmung des Dichtungswerkstoffs auf das Treibmittel bzw. Co-Treibmittel vi) ermöglicht werden. Vorzugsweise ist die Permeabilität des Dichtungsmaterials für das Co-Treibmittel vi) um mindestens einen Faktor 20 höher als die Permeabilität des Dichtungsmaterials für das Treibmittel v)

Durch die Vornukleierung, beispielsweise durch Zugabe geringer Mengen an Stickstoff und Kohlendioxid, kann im expandierbaren, treibmittelhaltigen Granulat eine zelluläre Morphologie eingestellt werden. Die mittlere Zellgröße im Zentrum der Partikel ist kann dabei größer als in den Randbereichen, die Dichte ist in den Randbereichen der Partikel höher sein. Dadurch werden Treibmittelverluste soweit wie möglich minimiert.

Durch die Vornukleierung ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Geringe Mengen Stickstoff oder Kohlendioxid bei Zugabe in die Schmelze können zu einer deutlichen Verkürzung der Vorschäumzeiten bei konstantem Treibmittelgehalt bzw. zu einer deutlichen Reduzierung der Treibmittelmengen bei gleichbleibenden Schäumzeiten und minimalen Schaumdichten führen. Zudem werden durch die Vornukleierung die Produkthomogenität und die Prozessstabilität verbessert.

Eine erneute Imprägnierung der erfindungsgemäßen Polymergranulate mit Treibmitteln ist des Weiteren deutlich schneller möglich als bei Granulaten mit identischer Zusammensetzung und kompakter, d. h. nichtzellulärer Struktur. Einerseits sind die Diffusionszeiten geringer, andererseits benötigt man analog zu direkt imprägnierten Systemen geringere Treibmittelmengen für das Schäumen.

Schließlich kann durch die Vornukleierung der Treibmittelgehalt, der zur Erzielung einer gewissen Dichte erforderlich ist, reduziert und damit die Entformzeiten bei der Formteil- bzw. Blockherstellung verringert werden. Somit können die Weiterverarbeitungskosten reduziert und die Produktqualität verbessert werden.

Das Prinzip der Vornukleierung kann sowohl für die Suspension-Technologie als auch für die Schmelzeimprägnierungstechnologie zur Herstellung von expandierbaren Partikel genutzt werden. Bevorzugt wird die Anwendung im Schmelzeextrusionsverfahren, bei dem die Zugabe der Co-Treibmittel vi) durch die druckunterstützte Unterwassergranulierung nach Austritt der treibmittelbeladenen Schmelze granuliert wird. Durch Wahl der Granulierparameter und des Co-Treibmittel vi) kann die Mikrostruktur des Granulats wie oben beschrieben gesteuert werden.

Bei höheren Mengen an Co-Treibmittel vi), beispielsweise im Bereich von 1 bis 10 Gew.-% bezogen auf die treibmittelhaltige Polymerschmelze, ist eine Erniedrigung der Schmelzetempratur oder der Schmelzeviskosität und damit eine deutliche Durchsatzerhöhung möglich. Damit ist auch eine schonende Einarbeitung thermolabiler Zusatzstoffe, beispielsweise Flammschutzmittel, zur Polymerschmelze möglich. Die Zusammensetzung der expandierbaren thermoplastischen Partikel wird dadurch nicht verändert, da das Co-Treibmittel bei der Schmelzeextrusion im Wesentlichen entweicht. Zur Ausnutzung dieses Effektes wird bevorzugt CO₂ eingesetzt. Bei N₂ sind die Effekte auf die Viskosität geringer. Stickstoff wird daher vorwiegend zur Einstellung der gewünschten Zellstruktur eingesetzt.
Die flüssigkeitsgefüllte Kammer zur Granulierung der expandierbaren thermoplastischen Polymerpartikel wird bevorzugt bei einer Temperatur im Bereich von 20 bis 80°C, besonders bevorzugt im Bereich von 30 bis 60°C betrieben.

Um den thermischen Abbau der Polymilchsäure so gering wie möglich zu halten, ist es ferner zweckmäßig, den mechanischen und thermischen Energieeintrag in allen Verfahrensstufen so gering wie möglich zu halten. Die mittleren Scherraten im Schneckenkanal sollten gering sein, bevorzugt werden Scherraten unter 250/sec, bevorzugt unter 100/sec, und Temperaturen unter 260°C sowie kurze Verweilzeiten im Bereich von 2 bis 10 Minuten in den Stufen c) und d) eingehalten. Die Verweilzeiten liegen ohne Kühlschritt in der Regel bei 1,5 bis 4 Minuten und wenn ein Kühlschritt vorgesehen ist in der Regel bei 5 bis 10 Minuten. Die Polymerschmelze kann durch Druckpumpen, z. B. Zahnradpumpen gefördert und ausgetragen werden.

Zur Verbesserung der Verarbeitbarkeit können die fertigen expandierbaren Granulate durch Glycerinester, Antistatika oder Antiverklebungsmittel beschichten werden.

Die erfindungsgemäßen expandierbaren Granulate weisen eine geringere Verklebung gegenüber Granulaten, die niedermolekulare Weichmacher enthalten, auf und zeichnen sich durch einen geringen Pentanverlust während der Lagerung auf.

Die erfindungsgemäßen expandierbaren Granulate können in einem ersten Schritt mittels Heißluft oder Wasserdampf zu Schaum partikeln mit einer Dichte im Bereich von 8 bis 100 kg/m³ vorgeschäumt und in einem 2. Schritt in einer geschlossenen Form zu Partikelformteilen verschweißt werden.

Überraschenderweise weisen die Schaumperlen gegenüber den expandierbaren Granulaten eine deutlich höhere Kristallinität auf. Die Kristallinität kann mit Hilfe der differentiellen Thermoanalyse (DSC) bestimmt werden. Die expandierbaren Granulate weisen nach der Herstellung in der Regel einen kristallinen Anteil von nur wenigen Prozent auf - sind also überwiegend amorph -, während die aufgeschäumten Perlen eine deutlich höhere Kristallinität von 8 bis 40 % und damit eine deutlich höhere Wärmeformbeständigkeit aufweisen. Überraschenderweise ist dieser Effekt bei Verwendung von Polymilchsäure-haltigen Polymeren, die 1 bis 49,9 und vorzugsweise 1 bis 29,9 Gew.-% eines aliphatischen oder teilaromatischen Polyesters enthalten (Komponente ii), deutlicher ausgeprägt als bei einem Polymilchsäure-haltigen Polymer, das keine Komponente ii aufweist. Die Komponente ii) scheint einen nukleierenden Effekt auf das Polymilchsäure-haltige Polymer auszuüben. Interessanterweise wird beim Aufschäumprozess eine hohe Kristallinität der Schaum perlen erreicht ohne das Aufschäumverhalten der expandierbaren Granulate zu beeinträchtigen.

Die mit dem erfindungsgemäßen Verfahren hergestellten Granulate weisen eine hohe biologische Abbaubarkeit bei gleichzeitig guten Eigenschaften beim Verschäumen auf. Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Granulate bzw. daraus hergestellte Schäume in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise lässt man gemäß DIN EN 13432 CO₂-freie Luft durch gereiften Kompost während des Kompostierens strömen. Der Kompost wird einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzun der Probe (berechnet aus dem Kohlenstoffgehalt der Probe) als prozentualer Grad des biologischen Abbaus definiert. Biologisch abbaubare Granulate zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

### Beispiele

Eingesetzte Materialien:
Komponente i:
   i-1: aliphatischer Polyester, Polylactid Natureworks^{®} 8051 D der Fa. NatureWorks.
Komponente ii:
   ii-1: Zur Herstellung des Polyesters ii-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponente und Säurekomponenten 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert.
      Der so erhaltene Polyester ii-1 wies eine Schmelztemperatur von 119°C und ein Molekulargewicht (Mₙ) von 23000 g/mol auf (entspricht Ecoflex^{®} FBX 7011, hergestellt von BASF SE).
   ii-2: Zur Herstellung des Polyesters ii-2 wurden in einem 450 Liter Polykondensationskessel 14,89 kg Sebacinsäure, 165,18 kg Bernsteinsäure , 172,5 kg 1,4-Butandiol und 0,66 kg Glycerin zusammen mit 0,031 kg Tetrabutylorthotitanat (TBOT) gemischt, wobei das Molverhältnis zwischen Alkoholkomponenten und Säurekomponente 1,30 betrug. Das Reaktionsgemisch wurde unter Abdestillation von Wasser auf eine Innentemperatur von 200°C erhitzt und bei dieser Temperatur 1 h lang gehalten. Anschließend wurde die Temperatur auf eine Innentemperatur von ca. 250-260°C erhöht und gleichzeitig das überschüssige 1,4-Butandiol unter Anlegen von Vakuum (Endvakuum ca. 3-20 mbar) abdestilliert. Die Polykondensation wurde nach Erreichen der gewünschten Endviskosität durch Abkühlen auf ca. 180-200 °C abgebrochen und der Präpolyester mit 1,5 kg Hexamethylendiisocyanat bei 240°C 1 h kettenverlängert und granuliert.
      Der so erhaltene Polyester ii-2 wies ein Molekulargewicht (Mn) von 37000 g/mol auf.
Komponente iii:
   iii-1: Joncryl^{®} ADR 4368 CS der Fa. BASF SE.
Komponente iv:
   iv-1: HP 325 Chinatalk Luzenac
Komponente v:
   v-1: Treibmittel: iso-Pentan
   v-2: Treibmittel: n-Pentan
Komponenete vi:
   vi-1: Co-Treibmittel: Stickstoff (N₂)
   vi-2: Co-Treibmittel: Kohlendioxid (CO₂)
   Die Anteile entsprechen Gew.-% und beziehen sich auf 100 Gew.-% Polymer (Komponenten i bis iii)

### Beispiel 1*

5,7 Anteile iso-Pentan (Komponente v-1) wurden in einem Extruder (Leistritz 18 mm) in eine Schmelze aus 79,6 Anteile i-1, 20 Anteile Komponente ii-1, 0,4 Anteile Komponente iii-1 und 0,3 Anteile Komponente iv-1 bei einer Schmelzetemperatur von 200°C - 220°C eingemischt. Die angegebenen Mengen in Anteilen beziehen sich auf die gesamte Menge der Komponenten i-1, ii-1 und iii-1.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung (Wassertemperatur 40 °C) wurden kompakte Granulate mit enger Größenverteilung hergestellt. Die durchschnittliche Teilchengröße betrug 1,4 mm. Die Dichte der imprägnierten Granualte (Rohperlen) betrug 742 kg/m³.

Durch Einwirkung von strömendem Wasserdampf wurden die Granulate vorgeschäumt. Die geschäumten Granulatperlen besitzen eine Dichte von 32 kg/m³. Die Granulatperlen ließen sich nach 16 Wochen nicht mehr aufschäumen.

### Vergleichsbeispiel 2

5,7 Anteile iso-Pentan (Komponente v-1) wurden in eine Schmelze aus 99,6 Anteile Komponente i-1, 0,4 Anteile Komponente iii-1 und 0,3 Anteile Komponente iv-1 bei einer Schmelzetemperatur von 200°C -220°C eingemischt.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm.

Durch Einwirkung von strömendem Wasserdampf wurden die Granulate vorgeschäumt. Die geschäumten Granulatperlen besitzen eine Dichte von 99 kg/m³.

### Vergleichsbeispiel 3

5,7 Anteile iso-Pentan wurden in eine Schmelze aus 100 Anteile Komponente i-1, und 0,3 Anteile Komponente iv-1 bei einer Schmelzetemperatur von 200°C -220°C eingemischt.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm.

Durch Einwirkung von strömendem Wasserdampf wurden die Granulate vorgeschäumt. Die geschäumten Granulatperlen besitzen eine Dichte von 117 kg/m³.

| Beisp. | Komp. i-1 [Anteile] | Komp. ii-1 [Anteile] | Komp. iii-1 [Anteile] | Komp. iv-1 [Anteile] | Komp. v-1 [Anteile] | Minimale Schüttdichte [kg/m³] |
|---|---|---|---|---|---|---|
| Bsp-1* | 79,6 | 20 | 0,4 | 0,3 | 5,7 | 32 |
| Vgl. Bsp-2 | 99,6 | | 0,4 | 0,3 | 5,7 | 99 |
| Vgl. Bsp-3 | 100 | | | 0,3 | 5,7 | 117 |

Die Mischung des Beispiels 1* und Vergleichsbeispieles 2 unterscheidet sich von derjenigen des Vergleichsbeispiels 3 durch die Beimischung von Komponente iii.

Um das Beispiel 1* und das Vergleichsbeispiel 3 zu bewerten, wurden sowohl Aufschäumzeit und Formteildichten gemessen. Außerdem wurde die entsprechende Verschweißbarkeit der aufgeschäumten Perlen zu Schaumstoffblöcken qualitativ beurteilt.

| Beispiele | Formteildichte | Verschweißung |
|---|---|---|
| Bsp-1* | 42 kg/m³ | ++ |
| Vgl. Bsp-3 | 180 kg/m³ | -- |

| | | |
|---|---|---|
| Legende: ++ sehr gut + gut - schlecht -- sehr schlecht | | |

Die Experimente wurden analog Beispiel 1*, allerdings auf einem Leistritz 27 mm Extruder durchgeführt
* nicht Gegenstand dieser Anmeldung

### Beispiel 4*

5,7 Anteile iso-Pentan (Komponente v-1) wurden in eine Schmelze aus 79,6 Anteile Komponente i-1, 20 Anteile Komponente ii-1, 0,4 Anteile iii-1 und 0,3 Anteile iv-1 bei einer Schmelzetemperatur von 200°C -220°C eingemischt. Die angegebenen Mengen in Anteilen beziehen sich auf die gesamte Menge der Komponenten i-1, ii-1 und iii-1. Die Schmelze wurde mit einem Durchsatz von 10,0 kg/h durch eine Düsenplatte mit einer Bohrung (Durchmesser der Düse 0,8 mm) gefördert. Mit Hilfe einer druckbeaufschlagten (9 bar) Unterwassergranulierung wurden kompakte Granulate mit enger Größenverteilung (durchschnittliche Teilchengröße 1,4 mm) hergestellt.

Durch Einwirkung von strömendem Wasserdampf wurden die Granulate vorgeschäumt. Die geschäumten Granulatperlen besitzen eine minimale Schüttdichte von 54 kg/m³.

### Beispiel 5*

5,7 Anteile aus einer 50/50 Mischung aus Komponente v-1 und Komponente v-2 wurden in eine Schmelze aus 79,6 Anteile i-1, 20 Anteile ii-1, 0,4 Anteile iii-1 und 0,3 Anteilen iv-1 bei einer Schmelzetemperatur von 200°C -220°C eingemischt. Die angegebenen Mengen in Anteilen beziehen sich auf die gesamte Menge der Komponenten i-1, ii-1 und iii-1. Die Schmelze wurde mit einem Durchsatz von 10,0 kg/h durch eine Düsenplatte mit einer Bohrung (Durchmesser der Düse 0,8 mm) gefördert. Mit Hilfe einer druckbeaufschlagten (9 bar) Unterwassergranulierung wurden kompakte Granulate mit enger Größenverteilung (durchschnittliche Teilchengröße 1,4 mm) hergestellt.

Durch Einwirkung von strömendem Wasserdampf wurden die Granulate vorgeschäumt. Die geschäumten Granulatperlen besitzen eine minimale Schüttdichte von 74 kg/m³.

### Beispiel 6*

5,7 Anteile n-Pentan (Komponente v-2) wurden in eine Schmelze aus 79,6 Anteilen i-1, 20 Anteile ii-1, 0,4 Anteile iii-1 und 0,3 Anteile iv-1 bei einer Schmelzetemperatur von 200°C -220°C eingemischt. Die angegebenen Mengen in Anteilen beziehen sich auf die gesamte Menge der Komponenten i-1, ii-1 und iii-1.
Die Schmelze wurde mit einem Durchsatz von 10,0 kg/h durch eine Düsenplatte mit einer Bohrung (Durchmesser der Düse 0,8 mm) gefördert. Mit Hilfe einer druckbeaufschlagten (9 bar) Unterwassergranulierung wurden kompakte Granulate mit enger Größenverteilung (durchschnittliche Teilchengröße 1,4 mm) hergestellt.

Durch Einwirkung von strömendem Wasserdampf wurden die Granulate vorgeschäumt. Die geschäumten Granulatperlen besitzen eine minimale Schüttdichte von 94 kg/m³.

**Tabelle:**

| Beispiele | Komponente i-1 [Anteile] | Komponente ii-1 [Anteile] | Komponente iii-1 [Anteile] | Komponente iv-1 [Anteile] | Komponente v [Anteile] | Minimale Schüttdichte [kg/m³] |
|---|---|---|---|---|---|---|
| Bsp-4* | 79,6 | 20 | 0,4 | 0,3 | 5,7 | 54 |
| | | | | | Komp. v-1 | |
| Bsp-5* | | | | 0,3 | 5,7 | 74 |
| | 79,6 | 20 | 0,4 | | Komp. v-1 (50%) | |
| | | | | | Komp. v-2 (50%) | |
| Bsp-6* | 79,6 | 20 | 0,4 | 0,3 | 5,7 | 94 |
| | | | | | Komp. v-2 | |

Beispiele 4* bis 6* weisen die gleiche Konzentration von Treibmittel und Komponenten i bis iv auf. Überraschenderweise zeigt Beispiel 4* ein besseres Expansionsverhalten gegenüber Beispiel 5* und 6*, ermittelt durch eine niedrigere minimale Schüttdichte der augeschäumten Perlen. Dies stellt einen klaren Vorteil durch die Verwendung von iso-Pentan als Treibmittel gegenüber der Verwendung von n-Pentan in diesem System dar.
* nicht Gegenstand dieser Anmeldung

### Beispiel 7

5,7 Anteile iso-Pentan (Komponente v-1) und 0,5 Anteile Kohlendioxid (vi-2) wurden in eine Schmelze aus 79,6 Anteile Komponente i-1, 20 Anteile Komponente ii-1, 0,4 Anteile Komponente iii-1 und 0,3 Anteile Komponente iv-1 bei einer Schmelzetemperatur von 200°C -220°C eingemischt. Die angegebenen Mengen in Anteilen beziehen sich auf die gesamte Menge der Komponenten i-1, ii-1 und iii-1.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung (Wassertemperatur 40°C) wurden kompakte Granulate mit enger Größenverteilung hergestellt. Die durchschnittliche Teilchengröße betrug 1,4 mm. Die Dichte der imprägnierten Granulate (Rohperlen) betrug 664 kg/m³.

Durch Einwirkung von strömendem Wasserdampf wurden die Granulate vorgeschäumt. Die geschäumten Granulatperlen besitzen eine Dichte von 30 kg/m³. Die minimale Schüttdichte der geschäumten Granulatperlen betrug nach 16 Wochen noch 41 kg/m³.

### Beispiel 8

5,7 Anteile iso-Pentan (Komponente v-1) und 0,1 Anteile Stickstoff (vi-1) wurden in einem Extruder (Leistritz 18 mm) in eine Schmelze aus 79,6 Anteile i-1, 20 Anteile Komponente ii-1, 0,4 Anteile Komponente iii-1 und 0,3 Anteile Komponente iv-1 bei einer Schmelzetemperatur von 200°C -220°C eingemischt. Die angegebenen Mengen in Anteilen beziehen sich auf die gesamte Menge der Komponenten i-1, ii-1 und iii-1. Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung (Wassertemperatur 40°C) wurden kompakte Granulate mit enger Größenverteilung hergestellt. Die durchschnittliche Teilchengröße betrug 1,4 mm. Die Dichte der imprägnierten Granulate (Rohperlen) betrug 650 kg/m³.

Durch Einwirkung von strömendem Wasserdampf wurden die Granulate vorgeschäumt. Die geschäumten Granulatperlen besitzen eine Dichte von 36 kg/m³. Die minimale Schüttdichte der geschäumten Granulatperlen betrug nach 16 Wochen noch 38 kg/m³.

### Beispiel 9*

5,7 Anteile iso-Pentan (Komponente v-1) wurden in einem Extruder (Leistritz 18 mm) in eine Schmelze aus 79,6 Anteile i-1, 20 Anteile Komponente ii-1, 0,4 Anteile Komponente iii-1 und 0,3 Anteile Komponente iv-1 bei einer Schmelzetemperatur von 200°C - 220°C eingemischt. Die angegebenen Mengen in Anteilen beziehen sich auf die gesamte Menge der Komponenten i-1, ii-1 und iii-1.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung (Wassertemperatur 20 °C) wurden kompakte Granulate mit enger Größenverteilung hergestellt. Die durchschnittliche Teilchengröße betrug 1,4 mm. Die Dichte der imprägnierten Granulate (Rohperlen) betrug 700 kg/m³.

Durch Einwirkung von strömendem Wasserdampf wurden die Granulate vorgeschäumt. Die geschäumten Granulatperlen besitzen eine Dichte von 52 kg/m³. Die minimale Schüttdichte der geschäumten Granulatperlen betrug nach 16 Wochen noch 126 kg/m³.

**Tabelle:**

| Beispiele | Komp. i-1 [Anteile] | Komp. ii-1 [Anteile] | Komp. iii-1 [Anteile] | Komp. iv-1 [Anteile] | Komp. v [Anteile] | Komp. vi [Anteile] | Minimale Schüttdichte [kg/m³] |
|---|---|---|---|---|---|---|---|
| Bsp-7 | 79,6 | 20 | 0,4 | 0,3 | 5,7 | 0,5 | 30 |
| | | | | | v-1 | vi-2 | |
| Bsp-8 | 79,6 | 20 | 0,4 | 0,3 | 5,7 | 0,1 | 36 |
| | | | | | v-1 | vi-1 | |
| Bsp-9* | 79,6 | 20 | 0,4 | 0,3 | 5,7 | | 52 |
| | | | | | v-1 | | |
| Bsp-10* 10°C | 79,6 | 20 | 0,4 | 0,3 | 5,7 | | 34 |
| | | | | | v-1 | | |

| | | | | | | | |
|---|---|---|---|---|---|---|---|
| * nicht Gegenstand dieser Anmeldung | | | | | | | |

### Beispiel 10*

5,7 Anteile iso-Pentan (Komponente v-1) wurden in einem Extruder (Leistritz 18 mm) in eine Schmelze aus 79,6 Anteile i-1, 20 Anteile Komponente ii-1, 0,4 Anteile Komponente iii-1 und 0,3 Anteile Komponente iv-1 bei einer Schmelzetemperatur von 200°C - 220°C eingemischt. Die angegebenen Mengen in Anteilen beziehen sich auf die gesamte Menge der Komponenten i-1, ii-1 und iii-1.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung (Wassertemperatur 10 °C) wurden kompakte Granulate mit enger Größenverteilung hergestellt. Die durchschnittliche Teilchengröße betrug 1,4 mm. Die Dichte der imprägnierten Granulate (Rohperlen) betrug 680 kg/m³.

Durch Einwirkung von strömendem Wasserdampf wurden die Granulate vorgeschäumt. Die geschäumten Granulatperlen besitzen eine Dichte von 34 kg/m³.
Die minimale Schüttdichte der geschäumten Granulatperlen betrug nach 16 Wochen noch 77 kg/m³.

### Beispiel 11*

5,7 Anteile iso-Pentan (Komponente v-1) wurden in einem Extruder (Leistritz 18 mm) in eine Schmelze aus 69,6 Anteile i-1, 30 Anteile Komponente ii-2, 0,4 Anteile Komponente iii-1 und 0,3 Anteile Komponente iv-1 bei einer Schmelzetemperatur von 200°C - 220°C eingemischt. Die angegebenen Mengen in Anteilen beziehen sich auf die gesamte Menge der Komponenten i-1, ii-2 und iii-1.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm. Durch Einwirkung von strömendem Wasserdampf wurden die Granulate vorgeschäumt. Die geschäumten Granulatperlen besitzen eine Dichte von 43 kg/m³.

### Beispiel 12

5,7 Anteile iso-Pentan (Komponente v-1) und 0,05 Anteile Stickstoff (vi-1) wurden in eine Schmelze aus 69,7 Anteile Komponente i-1, 30 Anteile Komponente ii-2, 0,3 Anteile Komponente iii-1 und 0,3 Anteile Komponente iv-1 bei einer Schmelzetemperatur von 200°C -220°C eingemischt.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm.

Durch Einwirkung von strömendem Wasserdampf wurden die Granulate vorgeschäumt. Die geschäumten Granulatperlen besitzen eine Dichte von 64 kg/m³.

### Beispiel 13

5,7 Anteile iso-Pentan (Komponente v-1) und 0,1 Anteile Stickstoff (vi-1) wurden in eine Schmelze aus 69,7 Anteile Komponente i-1, 30 Anteile Komponente ii-2, 0,3 Anteile Komponente iii-1 und 0,3 Anteile Komponente iv-1 bei einer Schmelzetemperatur von 200°C -220°C eingemischt.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm.

Durch Einwirkung von strömendem Wasserdampf wurden die Granulate vorgeschäumt. Die geschäumten Granulatperlen besitzen eine Dichte von 38 kg/m³.

### Beispiel 14

5,7 Anteile iso-Pentan (Komponente v-1) und 0,5 Anteile Kohlendioxid (vi-2) wurden in eine Schmelze aus 69,7 Anteile Komponente i-1, 30 Anteile Komponente ii-2, 0,4 Anteile Komponente iii-1 und 0,3 Anteile Komponente iv-1 bei einer Schmelzetemperatur von 200°C -220°C eingemischt.
Die Schmelze wurde mit einem Durchsatz von 3,5 kg/h durch eine Düsenplatte mit einer Bohrung (Durchmesser der Düse 0,65 mm) gefördert. Mit Hilfe einer druckbeaufschlagten (12 bar) Unterwassergranulierung wurden kompakte Granulate mit enger Größenverteilung hergestellt. Die durchschnittliche Teilchengröße betrug 1,4 mm.

Durch Einwirkung von strömendem Wasserdampf wurden die Granulate vorgeschäumt. Die geschäumten Granulatperlen besitzen eine Dichte von 39 kg/m³.

| | Bsp-11* | Bsp-12 | Bsp-13 | Bsp-14 |
|---|---|---|---|---|
| Komponente i-1 | 69,6 | 69,7 | 69,7 | 69,6 |
| Komponente ii-2 | 30 | 30 | 30 | 30 |
| Komponente iii-1 | 0.4 | 0.3 | 0.3 | 0.4 |
| Komponente iv-1 | 0.3 | 0,3 | 0,3 | 0,3 |
| Komponente v-1 | 5,7 | 5,7 | 5,7 | 5,7 |
| Komponente vi-2 | - | 0,05 | 0,1 | - |
| Komponente vi-2 | - | - | - | 0,5 |
| Schüttdichte Rohperle [kg/m³] | 765 | 661 | 648 | 720 |
| Minimale Schüttdichte Schaum [kg/m³] | 43 | 40 | 38 | 39 |
| Minimale Schüttdichte Schaum [kg/m³] nach 6 Wochen | Nicht schäumbar | 56 | 38 | 53 |

| | | | | |
|---|---|---|---|---|
| * nicht Gegenstand dieser Anmeldung | | | | |

Die vorteilhafte Zusammensetzung Polymilchsäurehaltiges Polymer PM' lässt sich durch den Vergleich der Beispiele 1* und 14 zeigen, die sich im Wesentlichen durch die Komponente ii unterscheiden.

Die Rohperlen aus Beispiel 1* und Beispiel 14 wurden vorgeschäumt und zu Prüfkörpern mit einer vergleichbaren Formdichtteile von 50 g/l verschweißt.
Die Prüfkörper aus Beispiel 14 zeigen eine bessere Wärmeformbeständigkeit in Form einer Dimensionsstabilität von kleiner 1% versus einer Dimensionsstabilität in Beispiel 1* von größer 2%.

Desweiteren zeigt der Prüfkörper aus Beispiel 14 eine bessere mechanische Stabilität gegenüber dem Prüfkörper aus Beispiel 1*, was sich in einer höheren Druckfestigkeit und höheren Biegearbeit bemerkbar macht.

| | Beispiel 1* | | Beispiel 14 | |
|---|---|---|---|---|
| Formteildichte (g/L) | 50 | | 50 | |
| Dimensionsstabilität bei 90°C, 30% Luftfeuchtigkeit | Δε(l) in % | 0,9 | Δε(l) in % | 0,2 |
| | Δε(b) in % | 0,2 | Δε(b) in % | 0,2 |
| | Δε(d) in % | 2,2 | Δε(d) in % | 0,4 |
| Biegearbeit (Kpa) | 344 | | 413 | |
| Druckfestigkeit (KPa) | 141 | | 176 | |

## Patentansprüche

1. Verfahren zur Herstellung von expandierbaren Polymilchsäure-haltigen Granulaten, umfassend die Schritte:
a) Aufschmelzen und Einmischen der Komponenten i) 50 bis 99,9 Gew.%, bezogen auf das Gesamtgewicht der Komponenten i bis iii, Polymilchsäure, ii) 0 bis 49,9 Gew.%, bezogen auf das Gesamtgewicht der Komponenten i bis iii, eines oder mehrerer weiterer Polymere iii) 0,1 bis 2 Gew.%, bezogen auf das Gesamtgewicht der Komponenten i bis iii, eines Diepoxids oder Polyepoxids und iv) 0,1 bis 5 Gew.-%, bezogen auf das Gesamtgewicht der Komponenten i und iii, eines Nukleierungsmittels,
b) Einmischen v) 1 bis 7 Gew.-%, bezogen auf das Gesamtgewicht der Komponenten i bis iv, eines organischen Treibmittels und vi) 0,01 bis 5 Gew.-% eines Co-Treibmittels - ausgewählt aus der Gruppe Stickstoff, Kohlendioxid, Argon, Helium oder Mischungen davon - in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

2. Verfahren nach Anspruch 1, **dadurch gekennzeichnet, dass** die Unterwassergranulierung bei 20 bis 80 °C durchgeführt wird.

3. Verfahren nach den Ansprüchen 1 oder 2, **dadurch gekennzeichnet, dass** als Komponente i) in Stufe a) Polymilchsäure mit einer MVR nach ISO 1133 [190°C/2,16 kg] von 5 bis 8 ml/10 Minuten eingesetzt wird.

4. Verfahren nach den Ansprüchen 1 oder 2, **dadurch gekennzeichnet, dass** als Komponente i) in Stufe a) Polymilchsäure mit einer Onset-Temperatur bei der Kaltkristallisation im Bereich von 80°C bis 125°C, gemessen mit DSC bei einer Heizrate von 20K/min, eingesetzt wird.

5. Verfahren nach den Ansprüchen 1 oder 2, **dadurch gekennzeichnet, dass** als organisches Treibmittel in Stufe b) iso-Pentan eingesetzt wird.

## Claims

1. A process for producing expandable pelletized material which comprises polylactic acid, which comprises the following steps:
a) melting and mixing to incorporate the following components: i) from 50 to 99.9% by weight, based on the total weight of components i to iii, of polylactic acid, ii) from 0 to 49.9% by weight, based on the total weight of components i to iii, of one or more further polymers, iii) from 0.1 to 2% by weight, based on the total weight of components i to iii, of a diepoxide or polyepoxide, and iv) from 0.1 to 5% by weight, based on the total weight of components i and iii, of a nucleating agent,
b) mixing to incorporate v) from 1 to 7% by weight, based on the total weight of components i to iv, of an organic blowing agent, and vi) from 0.01 to 5% by weight of a co-blowing agent - selected from the group of nitrogen, carbon dioxide, argon, helium, and mixtures thereof - into the polymer melt by means of a static or dynamic mixer at a temperature of at least 140°C,
c) discharging through a die plate with holes, the diameter of which at the exit from the die is at most 1.5 mm, and
d) pelletizing the melt comprising blowing agent directly downstream of the die plate, and under water, at a pressure in the range from 1 to 20 bar.

2. The process according to claim 1, wherein the underwater pelletization process is carried out at from 20 to 80°C.

3. The process according to claim 1 or 2, wherein component i) used in stage a) comprises polylactic acid with MVR of from 5 to 8 ml/10 minutes to ISO 1133 [190°C/2.16 kg].

4. The process according to claim 1 or 2, wherein component i) used in stage a) comprises polylactic acid with a low-temperature-crystallization onset temperature in the range from 80°C to 125°C, measured by DSC at a heating rate of 20K/min.

5. The process according to claim 1 or 2, wherein the organic blowing agent used in stage b) comprises isopentane.

## Revendications

1. Procédé pour la préparation de granulats expansibles contenant du poly(acide lactique), comprenant les étapes consistant à :
a) faire fondre et mélanger les composants i) 50 à 99,9% en poids, par rapport au poids total des composants i à iii, de poly(acide lactique), ii) 1 à 49,9% en poids, par rapport au poids total des composants i à iii, d'un ou plusieurs polymère(s) supplémentaire(s), iii) 0,1 à 2% en poids, par rapport au poids total des composants i à iii, d'un diépoxyde ou polyépoxyde et iv) 0,1 à 5% en poids, par rapport au poids total des composants i et iii, d'un agent de nucléation,
b) incorporer v) 1 à 7% en poids, par rapport au poids total des composants i à iv, d'un agent gonflant organique et vi) 0,01 à 5% en poids d'un coagent gonflant - choisi dans le groupe constitué par l'azote, le dioxyde de carbone, l'argon, l'hélium ou des mélanges de ceux-ci - dans la masse fondue de polymère au moyen d'un mélangeur statique ou dynamique à une température d'au moins 140°C,
c) évacuer via une plaque de filière, comportant des trous, dont le diamètre à la sortie de la filière est d'au plus 1,5 mm et
d) granuler la masse fondue contenant l'agent gonflant directement en aval de la plaque de filière sous eau à une pression dans la plage de 1 à 20 bars.

2. Procédé selon la revendication 1, **caractérisé en ce que** la granulation sous eau est réalisée à 20 à 80°C.

3. Procédé selon la revendication 1 ou 2, **caractérisé en ce qu'**on utilise, comme composant i) dans l'étape a), du poly(acide lactique) présentant un MVR (indice de fluidité à chaud) selon la norme ISO 1133 [190°C/2,16 kg] de 5 à 8 ml/10 minutes.

4. Procédé selon la revendication 1 ou 2, **caractérisé en ce qu'**on utilise, comme composant i) dans l'étape a), du poly(acide lactique) présentant une température de démarrage lors de la cristallisation à froid dans la plage de 80°C à 125°C, mesurée par DSC (calorimétrie à balayage différentiel) à une vitesse de chauffage de 20 K/min.

5. Procédé selon la revendication 1 ou 2, **caractérisé en ce qu'**on utilise, comme agent gonflant organique dans l'étape b), de l'isopentane.
